# EUROPÄISCHE PATENTSCHRIFT

(11) **EP 1 058 026 B1**
(45) Veröffentlichungstag und Bekanntmachung des Hinweises auf die Patenterteilung: **17.11.2004**
(21) Anmeldenummer: 00110758.0
(22) Anmeldetag: 19.05.2000
(51) Int. Cl.: F16F 9/05, F16F 9/04

(54) **Rollbalg-Luftfeder**
Rolling-lobe air spring
Ressort pneumatique à soufflet roulant

(30) Priorität: 01.06.1999 DE 19925092
(43) Veröffentlichungstag der Anmeldung: 06.12.2000
(73) Patentinhaber: ContiTech Luftfedersysteme GmbH, 30165 Hannover (DE)
(72) Erfinder: Wenzel, Detlef, 30890 Barsinghausen (DE); Degenhardt, Manfred, 30982 Pattensen (DE)
(74) Vertreter: Schneider, Egon

(56) Entgegenhaltungen:
- WO-A-97/21045
- DE-U- 29 808 109
- PATENT ABSTRACTS OF JAPAN vol. 1996, no. 11, 29. November 1996 (1996-11-29) -& JP 08 177938 A (FUKOKU CO LTD), 12. Juli 1996 (1996-07-12)

## Beschreibung

Die Erfindung betrifft eine Rollbalg-Luftfeder gemäß der Merkmale 1.1 bis 1.3.1. des Anspruchs 1 und ein Verfahren zu deren Herstellung.

Luftfedern, wie sie im Fahrzeugbau zur Abfederung von Radaufhängungen Verwendung finden, bestehen im wesentlichen aus einem Rollbalg (Luftfederbalg), der endseitig einerseits von einer Abdeckplatte (Konusplatte) und andererseits von einem Abrollkolben begrenzt ist und so in seinem Innenraum ein Luftfedervolumen umschließt. Der Rollbalg selbst besteht aus Gummi oder gummiähnlichem Kunststoff mit endseitigen Befestigungswülsten, wie z. B. in der DE-OS 29 05 791 beschrieben.
Das an der Abdeckplatte befindliche Rollbalg-Ende wird üblicherweise durch Bördeln befestigt, weshalb die (obere) Abdeckplatte auch "Bördelplatte" genannt wird. Der untere Rand des Rollbalgs, d. h. die untere Wulstpartie wird üblicherweise als mit Dichtrillen versehener Konus ausgebildet, um dann - mit einem Spannteller versehen - an einen mehrteiligen Abrollkolben geschraubt zu werden.

In der Fig. 1 der EP 0 546 385 B1 ist ein Luftfederbalg mit einem verspannbaren Dichtwulst dargestellt, der von einem umgebördelten Rand eines als Bördelplatte ausgebildeten oberen Befestigungsteiles umfasst und dicht verspannt ist.

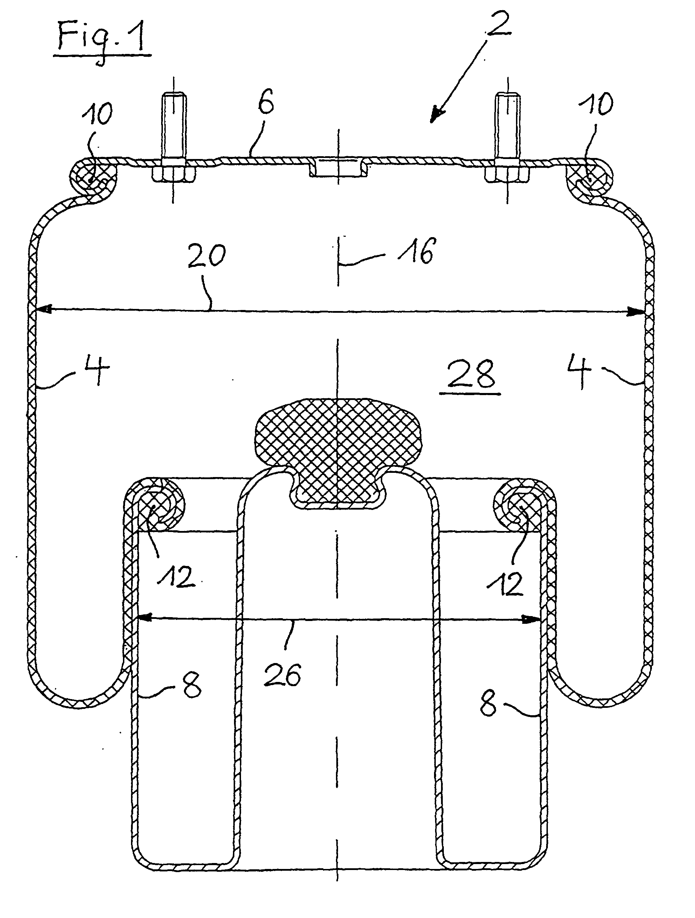

Aus der JP 08 177 938 ist eine Rollbalg-Luftfeder zu entnehmen, die im Wesentlichen aus einem flexiblen Rollbalg, einer Abdeckplatte und einem Abrollkolben besteht. Die in Fig. 1 gezeigt Luftfeder ist aus diesen Bauteilen zusammengesetzt. Dabei ist ein kolbenseitiger Rollbalg-Wulst (4) mit Hilfe einer an den Abrollkolben (9) anschraubbaren Montageplatte (10) befestigt (Schraube 15). Eine derartige Schraubbefestigung ist relativ aufwendig und umständlich.

Darüber hinaus sind Luftfedern bekannt, bei denen auch das dem Abrollkolben zugewandte Ende des Rollbalges mittels Bördeln befestigt ist. Gemäß der DE-PS 10 39 375 ist der untere Wulst des Luftfeder-Balges mit dem des Abrollkolbens fest verbunden. Der zum Rollbalg gleichachsig angeordnete, zylinderförmige Abrollkolben läuft in einen umgebördelten Rand aus, der um den Wulst herumgreift und diesen gegen den Ringrand eines Deckels drückt. Dieser Deckel dient dazu, den Führungskörper zu schließen und gegenüber dem Rollbalg abzuschließen. Der umgebördelte Rand wird um den Wulst des Rollbalges herumgelegt.

Ohne solch einen auf dem Abrollkolben anzubringenden zusätzlichen Deckel bzw. Spannteller kommt der in dem Gebrauchsmuster DE 298 08 109 U1 beschriebene Abrollkolben aus. Dabei besteht der Kolbenteil aus einem einteilig ausgebildeten Formkörper und wird durch Bördeln mit dem Rollbalg dadurch verbunden, dass die äußere Umfangswand des Abrollkolbens zur Befestigung des dem Abrollkolben zugewandten Balgendes einwärts umgebördelt ist. Das entsprechende Balgende weist einen vom Bördelrand umgriffenen wulstartigen Ringansatz auf, der mit einer Verstärkungseinlage versehen ist.

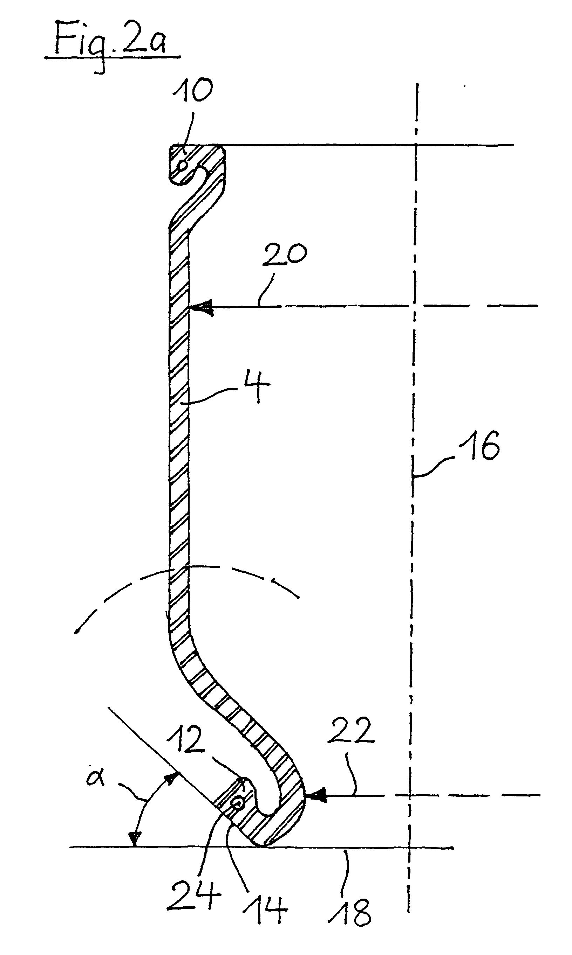

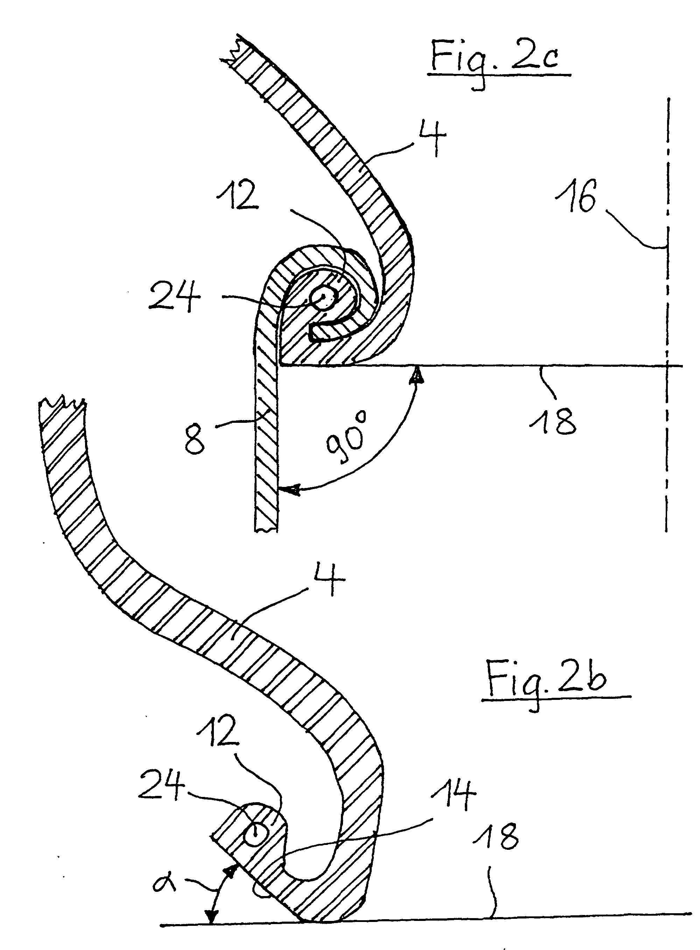

Aus der WO 97/21045 ist eine Luftfeder bekannt, die ebenfalls im Wesentlichen aus einem Deckel, einem Rollbalg und einem Abrollkolben besteht. Zur Bördelbefestigung am Abrollkolben weist der in Fig. 2 dargestellte Balg in seinem Endbereich eine Ecke (26) auf, so dass sich eine endseitige Teillänge ergibt, die im teils umgekrempelten Zustand des Rollbalgs nach innen gerichtet ist. Da der Rollbalg-Wulst (32, 33) einen geringeren Radius aufweist als der restliche Rollbalg, erscheinen die in Fig. 2 dargestellten geometrischen Verhältnisse realistisch zu sein. Nicht nachvollziehbar ist jedoch der Zustand ohne Rollfalte, weil der abgewinkelte Teilbereich dann nach außen weisen würde, was wegen des geringeren Wulstradius praktisch nicht möglich ist.

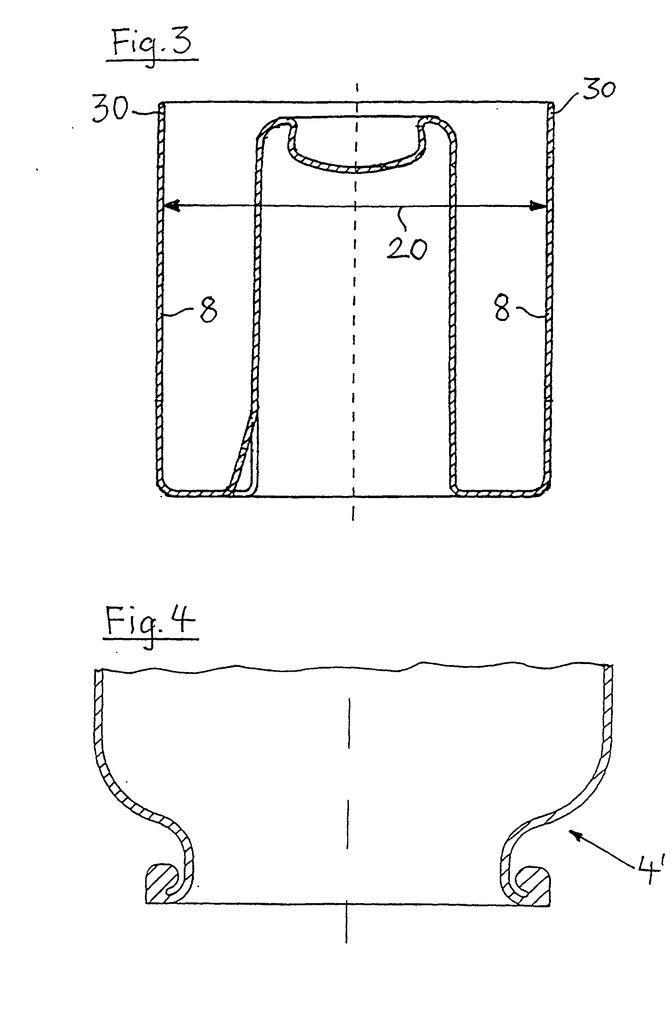

Praktische Versuche zur Herstellung derartiger Luftfedern haben gezeigt, daß Probleme bei der Befestigung des Rollbalges am offenen Kolben auftreten. Der in üblicher Weise angeformte Wulst eines Balges ist am offenen Abrollkolben nicht ohne weiteres einsetzbar. Bei einem Wulst an der oberen Abdeckplatte liegt die Dichtfläche waagerecht, um beim Bördeln gegen die obere Abdeckplatte angepreßt zu werden. Da der Abrollkolben aber keine stirnseitige Platte aufweist, die üblicherweise als Gegenhaltefläche dient, ist das von der waagerechten Abdeckplatte her bekannte Bördelungsprinzip nicht auf die Befestigung des unteren Rollbalgrandes übertragbar. Ein vorgeschlagenes Kippen des Wulstes um 90° ist auch nicht möglich, da der Rollbalg in einer Form hergestellt wird und der sich einstellende Hinterschnitt keine Entformung möglich macht (Fig. 4).

Zur überwindung der genannten Probleme bei der Befestigung des Rollbalgs am offenen Abrollkolben durch Bördeln wurde folgender Forderungskatalog aufgestellt:
Die besondere Ausbildung des kolbenseitigen Wulstes muß derart sein, daß beim Bördeln ein Kontakt der Bördelkante mit dem Balg so spät wie möglich erfolgt, um ein Ausweichen des Wulstes nach unten in den freien Raum zu vermeiden. Der Bördelspalt muß beim Eingreifen des Wulstes bereits so weit geschlossen sein, daß der Wulst nicht mehr herausrutschen kann. Der Wulst muß sich beim Erfassen gleich klemmend gegen die Innenfläche der Kontaktwand legen. Zusammengefaßt besteht die Aufgabe der vorliegenden Erfindung darin, ausgehend von dem mit dem Gbm 298 08 109 U1 vorliegenden Stand der Technik das kolbenseitige Balgende so zu gestalten, daß es auch bei einem stirnseitig offenen Kolben sicher bördelbar ist. Aus diesem Stand der Technik ist die Form des Wulstes im unver bördelten Zustand nicht bekannt.

Die Lösung dieser Aufgabe ist mit Anspruch 1 beziehungsweise Anspruch 6 gegeben. Durch die erfindungsgemäße Ausgestaltung der kolbenseitigen Wulstpartie kann diese mit einem einteiligen Stahlblech-Abrollkolben ohne zusätzliche Befestigungsteile, wie z. B. Spannteller und dergleichen, verbördelt werden. Dies trägt zur Bauteilereduzierung des Gesamtsystems bei.

Dadurch, daß der kolbenseitige Wulst des Rollbalgs vorzugsweise unter 45° zur Waagerechten ao ausgebildet wird, daß weder an der Vulkanisationsform noch am Produkt selbst Hinterschneidungen vorhanden sind, gibt es keine Ein- und Ausformschwierigkeiten. Der Wulst ist somit so formstabil, daß anschließend ein Abrollkolben damit gebördelt werden kann.
Wulstausbildungen mit Dichtflächenneigungen zwischen 45° und 65° haben sich als besonders vorteilhaft erwiesen. Durch den einwärts gerichteten Bördelprozeß schwenkt der Wulst in eine 90°-Lage zur Waagerechten.

Die Durchmesserverringerung im unteren Rollbalg-Bereich ist lediglich zur Begünstigung der Ausbildung der Rollfalte beim Betrieb des Luftfederbalgs notwendig. Dabei sind der Durchmesser des Wulstkerns und der Durchmesser der Kolbenwand aufeinander abgestimmt.

Anhand der Abbildungen wird die erfindungsgemäße Rollbalg-Luftfeder näher beschrieben. Es zeigt:
Fig. 1 einen Längsschnitt durch eine erfindungsgemäße Rollbalg-Luftfeder;
Fig. 2a einen Rollbalg, einseitig, im Längsschnitt;
Fig. 2b das kolbenseitige Ende des Rollbalgs, ebenfalls einseitig, im Längsschnitt;
Fig. 2c das kolbenseitige Ende des Rollbalgs nebst Bördelkante des Abrollkolbens, einseitig, im Längsschnitt;
Fig. 3 einen zur Befestigung des erfindungsgemäßen Rollbalgs geeigneten Abrollkolben, im Längsschnitt;
Fig. 4 das kolbenseitige Ende eines Rollbalgs gemäß Gbm 298 08 109 U1.

Die in der Fig. 1 dargestellte Rollbalg-Luftfeder 2 besteht im wesentlichen aus einem flexiblen Rollbalg 4 aus Gummi oder gummiähnlichem Kunststoff, einer Abdeckplatte 6 und einem Abrollkolben 8. An seinen beiden Enden ist der Rollbalg 4 jeweils mit einem Wulst 10, 12 versehen. Der "obere" Wulst 10 ist durch Bördeln mit der Abdeckplatte (Bördelplatte) 6 verbunden, während der kolbenseitige Wulst 12 an einer Bördelkante 30 des Abrollkolbens 8 befestigt ist. Der von Abdeckplatte 6 und Abrollkolben 8 begrenzte Rollbalg umschließt den Luftfederinnenraum 28.

Wesentliche Einzelheiten der erfindungsgemäßen Rollbalg-Luftfeder sind in den Fig. 2a - c dargestellt. Der in Fig. 2a einseitig im Längsschnitt abgebildete Rollbalg 4 weist an seinen beiden Enden wulstförmige Verdickungen auf. Der obere Wulst 10 ist in herkömmlicher Weise ausgebildet und dient zur Befestigung des Rollbalgs 4 an der Abdeckplatte (Bördelplatte) 6. Der untere, zur Befestigung am Abrollkolben 8 vorgesehene Rollbalg-Wulstrand 12 ist erfindungsindividuell an den Bördelrand 30 des oben offenen Abrollkolbens 8 angepaßt. Der in Fig. 3 dargestellte Kolben 8 gibt einen zylindrischen Kolbenrand 30 wieder. Dies ist der Zustand vor dem Bördeln des Wulstes 12.

Zur Vereinfachung der Rollbalg-Herstellung ist die Geometrie der Rollbalgoberfläche und der dazu korrespondierenden Herstellungsform reliefartig so ausgestaltet, daß auf einen Hinterschnitt weitgehend verzichtet werden kann. Die weitgehende Vermeidung eines Hinterschnitts erleichtert die Entformung.

Die Anbringung des Rollbalgs 4 an dem Abrollkolben 8 soll sowohl mechanisch fest als auch pneumatisch dicht sein. Zu diesem Zweck weist die wulstförmige Verdickung des kolbenseitigen Rollbalg-Endes eine Dichtfläche 14 auf. Diese Dichtfläche 14 ist bei senkrecht stehendem Rollbalg 4 nicht waagerecht sondern ist um einen Winkel α zu der auf der Balgachse 16 stehenden Senkrechten 18 gekippt. In der Abbildung ist dieser Winkel α = 45° Er kann aber auch einen größeren Wert annehmen. Sowohl im Hinblick auf den Entformungsvorgang des herzustellenden Rollbalgs 4 als auch zur Anbringung des Wulstes 12 an dem Bördelrand 30 des Kolbens 8 haben sich Winkel zwischen 45° und 65° als besonders gut geeignet erwiesen.
Zur Verstärkung weist der kolbenseitige Wulst 12 einen Wulstkern (Ringkörper) 24 aus Stahl oder Stahldraht auf.

Der Durchmesser 22 des Wulstes 12 ist im Kolbenbereich auf den Durchmesser 26 der Kolbenwand abgestimmt. Dabei hakt der Wulst 12 des Rollbalgs 4 nicht in einen vorgebördelten Kolbenrand 30 ein. Wie aus der Fig. 3 ersichtlich, ist der Kolbenrand 30 nicht vorgebördelt. Der Rand 30 ist zunächst zylindrisch ausgebildet; er schließt sich erst durch den Bördelvorgang um den Wulst 12 des Balges 4. Am Ende des Bördelvorganges ist der Wulst 12 vom gebördelten Rand 30 des Abrollkolbens 8 fest umschlossen, wobei die kolbenseitige Dichtfläche 14 des Rollbalgs 4 auf 90°, bezogen auf die "Waagerechte", gedreht wird und so ganzflächig am oberen Ende der Kolbenwand anliegt (Fig. 2c). D. h.: Der Kolbenrand 30 wird insgesamt um ca 270° nach innen umgelenkt.
Dieser Bördelvorgang erfolgt mit einem speziellen Werkzeug.

Zur Verbesserung des Abrollvorganges des Rollbalgs 4 auf der Außenfläche des Abrollkolbens 8 ist der Durchmesser 22 des Rollbalgs 4 im Wulstbereich geringer als der sonstige Rollbalgdurchmesser 20.

Soll ein Stoßdämpfer in die Luftfeder 2 integriert werden, so kann er als separates Teil in den offenen Kolben 8 eingebaut werden.

### Bezugszeichenliste

- 2: Rollbalg-Luftfeder
- 4: Rollbalg, Balg
- 6: Abdeckplatte (Bördelplatte)
- 8: Abrollkolben
- 10: oberer Wulst(rand)
- 12: kolbenseitiger Wulst<rand>
- 14: kolbenseitige Dichtfläche
- 16: Balgachse
- 18: Senkrechte zur Balgachse
- 20: Rollbalg-Durchmesser
- 22: Durchmesser des Wulstes im Kolbenbereich
- 24: Wulstkern (Ringkörper)
- 26: Durchmesser der Kolbenwand
- 28: Luftfeder-Innenraum
- 30: Bördelrand, Bördelkante, Kolbenrand

## Patentansprüche

1. Rollbalg-Luftfeder (2), umfassend:
1.1 eine Abdeckplatte (6),
1.2 einen Abrollkolben (8) und
1.3 einen Rollbalg (4),
1.3.1 der an seinem, dem Abrollkolben (8) zugewandten Ende einen mit dem Abrollkolben verbördelten Wulst (12) aufweist,
1.3.1.1 der im unverbördelt Zustand derartig ausgebildet ist, dass seine Dichtfläche (14) nicht senkrecht zur Achse (16) des Rollbalgs (4) liegt, sondern - bezogen auf die auf der Balgachse (16) stehenden Senkrechten (18) - unter einem Neigungswinkel α ausgerichtet ist.

2. Rollbalg-Luftfeder nach Anspruch 1,
**dadurch gekennzeichnet,**
**dass** der Winkel α, um den der kolbenseitige Wulst (12) zu der auf der Balgachse (16) stehenden Senkrechten (18) gekippt ist, in einem Winkelbereich von 45° bis 65° liegt.

3. Rollbalg-Luftfeder nach Anspruch 1 oder 2,
**dadurch gekennzeichnet,**
**dass** der Rollbalg (4) an seinem dem Abrollkolben (8) zugewandten Ende einen-verglichen mit dem sonstigen Rollbalg-Durchmesser (20) - geringeren Durchmesser (22) aufweist

4. Rollbalg-Luftfeder nach einem der Ansprüche 1 bis 3,
**dadurch gekennzeichnet,**
**dass** der Wulst (12) einen starren Wulstkern (24) aufweist, dessen Durchmesser (22) auf den Durchmesser (26) der Kolbenwand abgestimmt ist.

5. Rollbalg-Luftfeder nach einem der Ansprüche 1 bis 4,
**dadurch gekennzeichnet,**
**dass** der kolbenseitige Wulst (12) keine Hinterschneidungen - weder seitens der Vulkanisationsform noch am Balg (4) selbst - aufweist.

6. Verfahren zur Herstellung einer Rollbalg-Luftfeder gemäß einem der Ansprüche 1 bis 5,
**dadurch gekennzeichnet,**
**dass** zunächst die Dichtfläche (14) des kolbenseitigen Rollbalg-Wulstes (12) gekippt unter einem Winkel α in Richtung der Abdeckplatte zu der auf der Balgachse (16) stehenden Senkrechten (18) formstabil hergestellt wird, und
**dass** dann der Abrollkolben (8) mit dem so hergestellten Rollbalg (4) in der Weise gebördelt wird,
**dass** der kolbenseitige Wulst (12) mit seiner Dichtfläche (14) beim abgeschlossenen Bördelvorgang in Richtung der Balgachse (16) zu liegen kommt.

## Claims

1. Rolling-lobe air spring (2), comprising:
1.1 a cover plate (6)
1.2 a roll-off piston (8) and
1.3 a rolling-lobe type bellows (4),
1.3.1 which at its end which faces the roll-off piston (8) has a bead (12) over which the roll-off piston is flanged,
1.3.1.1 which bead in the unflanged state is configured in such a way that its sealing surface (14) does not lie perpendicular to the axis (16) of the rolling-lobe bellows (4) but is aligned at an angle of inclination α - with respect to the perpendicular (18) standing on the bellows' axis (16).

2. Rolling-lobe air spring according to claim 1, **characterised in that** the angle α, by which the bead (12) at the piston end is tilted relative to the perpendicular (18) standing on the bellows' axis (16), lies in a range between 45° and 65°.

3. Rolling-lobe air spring according to claim 1 or 2, **characterised in that** the rolling-lobe bellows (4) has a smaller diameter (22) at its end facing the roll-off piston (8) - compared with the rest of its diameter (20).

4. Rolling-lobe air spring according to one of claims 1 to 3, **characterised in that** the bead (12) has a rigid bead core (24), the diameter (22) of which is matched to the diameter (26) of the piston wall.

5. Rolling-lobe air spring according to one of claims 1 to 4, **characterised in that** the bead (12) at the piston end has no undercuts - neither on the part of the vulcanisation mould nor on the bellows (4) itself.

6. Method for manufacturing a rolling-lobe air spring according to one of claims 1 to 5, **characterised in that**
first the sealing surface (14) of the bead (12) at the piston end of the rolling-lobe bellows is produced in a dimensionally stable manner, tilted at an angle α in the direction of the cover plate relative to the perpendicular (18) standing on the bellows' axis (16), and
**in that** then the roll-off piston (8) is bent over with the rolling-lobe bellows (4) thus produced, in such a way
that the bead (12) at the piston end comes to lie with its sealing surface (14) in the direction of the bellows' axis (16) when the bending-over operation is completed.

## Revendications

1. Ressort pneumatique à soufflet roulant (2) comprenant :
1.1 une plaque de revêtement (6),
1.2 un piston dérouleur (8), et
1.3 un soufflet roulant (4),
1.3.1 qui présente un renflement (12) bordé avec le piston dérouleur sur son extrémité tournée vers le piston dérouleur (8),
1.3.1.1 qui est conçu dans l'état non bordé de telle sorte que sa surface d'étanchéité (14) n'est pas perpendiculaire à l'axe (16) du soufflet roulant (4), mais est orientée avec un angle d'inclinaison α par rapport à la perpendiculaire se trouvant sur l'axe du soufflet (16).

2. Ressort pneumatique à soufflet roulant selon la revendication 1,
**caractérisé en ce que**
l'angle α, duquel le renflement (12) côté piston est basculé par rapport à la perpendiculaire se trouvant sur l'axe du soufflet (16), est situé dans une plage angulaire de 45° à 65°.

3. Ressort pneumatique à soufflet roulant selon la revendication 1 ou 2,
**caractérisé en ce que**
le soufflet roulant (4) présente sur son extrémité tournée vers le piston dérouleur (8) un diamètre (22) plus faible par rapport au diamètre habituel de soufflet roulant (20).

4. Ressort pneumatique à soufflet roulant selon l'une quelconque des revendications 1 à 3,
**caractérisé en ce que**
le renflement (12) présente un noyau de renflement (24) rigide, dont le diamètre (22) est adapté au diamètre (26) de la paroi du piston.

5. Ressort pneumatique à soufflet roulant selon l'une quelconque des revendications 1 à 4,
**caractérisé en ce que**
le renflement (12) côté piston ne présente pas des contre-dépouilles, ni du côté du moule de vulcanisation ni sur le soufflet (4) même.

6. Procédé pour la fabrication d'un ressort pneumatique à soufflet roulant selon l'une quelconque des revendications 1 à 5,
**caractérisé en ce que**
la surface d'étanchéité (14) du renflement à soufflet roulant (12) côté piston est fabriquée de façon indéformable en formant un angle α en direction de la plaque de recouvrement par rapport à la perpendiculaire (18) se trouvant sur l'axe du soufflet (16), et
**en ce que** le piston dérouleur (8) est alors bordé avec le soufflet roulant (4) ainsi fabriqué en ce sens que
le renflement (12) côté piston arrive avec sa surface d'étanchéité (14), lorsque l'opération de bordage est terminée, en direction de l'axe du soufflet (16).
